# EUROPEAN PATENT SPECIFICATION

(11) **EP 0 886 248 B1**
(45) Date of publication and mention of the grant of the patent: **11.05.2005**
(21) Application number: 98111063.8
(22) Date of filing: 17.06.1998
(51) Int. Cl.: G07F 7/10, G07F 19/00, H04L 9/00

(54) **Method and apparatus for registration of information with plural institutions and recording medium with registration program stored thereon**
Verfahren und Vorrichtung zum Registrieren von Informationen bei mehreren Einrichtungen und Registriermedium mit darauf gespeichertem Registrierprogramm
Méthode et dispositif pour l'enregistrement de données auprès de plusieurs instituts et moyen d'enregistrement avec programme d'enregistrement stocké dedans

(30) Priority: 18.06.1997 JP 16155897
(43) Date of publication of application: 23.12.1998
(73) Proprietor: Nippon Telegraph and Telephone Corporation, Tokyo 163-8019 (JP)
(72) Inventor: Moribatake, Hidemi, Yokohama-shi, Kanagawa, 235-0033 (JP); Hirata, Shin-ichi, Zushi-shi, Kanagawa, 249-007 (JP)
(74) Representative: Hoffmann, Eckart, Dipl.-Ing.

(56) References cited:
- EP-A- 0 810 563
- US-A- 4 984 270
- US-A- 5 420 926

## Description

### BACKGROUND OF THE INVENTION

The present invention relates to a method and apparatus for registering a plurality of pieces of electronic information with a plurality of institutions, for example, in an electronic cash system through utilization of a telecommunication system. Further, the invention pertains to a recording medium with a registration program stored thereon.

For example, in an electronic cash system, a user registers his generated information I_{A} with a bank, then has the bank to sign the information I_{A} and issue the signed information as a license, and uses it to get another institution to issue electronic cash. In such an instance, the user needs to register different pieces of information I_{A} and I_{B} with the bank and the electronic cash issuing institution, respectively, in such a way that either of them will have no knowledge of the information registered with the other.

To register two such different pieces of information I_{A} and I_{B}, for example, with two institutions A and B without any risk of revealing to either of them what is registered with the other, it is necessary that the institution A prepare a pair of public and secret keys PK_{A} and SK_{A}, that the institution B similarly prepare a pair of public and secret keys PK_{B} and SK_{B}, and that the user enciphers the different pieces of information I_{A} and I_{B} through utilization of the public keys PK_{A} and PK_{B}, respectively, and registers the enciphered pieces of information with the institutions A and B separately of each other. This inevitably gives rise to the problem of a heavy load of processing on the user side.

US-A-4,984,270 discloses secure transmission of data, wherein a user's ID card contains an issuer security key assigned by an issuer, and the user's Personal Identification Number (PIN) is encrypted with this key and transmitted together with transaction data through intermediate computers (or nodes) to the issuer's computer, where the encrypted PIN is decrypted with the issuer security key. This system achieves high security and high transmission speed by encrypting the PIN with the issuer security key and avoiding decryption and reencryption at each node. However, in this prior art, none of the intermediate nodes serves as any institution for registering the user's information. The transaction data are exposed to the intermediate nodes. Although the document teaches encryption of information with the issuer security key at the user side, the document does not teach anything about transmission of plural pieces of information to be registered separately at different institutions.

### SUMMARY OF THE INVENTION

It is therefore an object of the present invention to provide a method and apparatus which permit registration of different pieces of user information with a plurality of institutions simply by presenting required information to each of them without providing any chance for either institution to get the information registered with the other institution.

Another object of the present invention is to provide a recording medium having stored thereon a programs for such registration of information.

These objects are achieved with a method, apparatus and recording medium as claimed in claims 1, 6, 8 and 15. Preferred embodiments of the invention are subject-matter of the dependent claims.

The principles of the registration method according to the present invention are that the user generates the pieces of information I_{A} and I_{B} for registration with the institutions A and B, respectively, then enciphers the information I_{B} with a cipher key EK to obtain information EK(I_{B}), and sends these pieces of information I_{A} and EK(I_{B}) to the institution A. The institution A registers the information I_{A} as user information and sends the information EK(I_{B}) to the institution B. The institution B deciphers the information EK(I_{B}) with a cipher key EK and registers the resulting information I_{B}.

The registration method according to the present invention comprises the steps as follows:

When a user U registers the different pieces of information I_{A} and I_{B} with an institution A apparatus and an institution B apparatus through a user apparatus:
the user unit generates key information K to be shared with the institution B, and enciphers the pieces of information I_{B} and K to be registered with the institution B apparatus through the use of a public key (PK_{B}) of the institution B, thereby generating information PK_{B}(I_{B}, K);
the user apparatus sends the pieces of information PK_{B}(I_{B}, K) and I_{A} to the institution A apparatus;
the institution A apparatus registers the user information I_{A} contained in its received information and sends the remaining information PK_{B}(I_{B}, K) to the institution B apparatus; and
the institution B apparatus deciphers the information PK_{B}(I_{B}, K) with its own secret key SK_{B} to derive I_{B} and K, and registers I_{B}.

In this instance, when the institution B apparatus does not send its signature to the user apparatus to inform it of the registration of the user information, the key information K need not be generated.

Instead of generating the information PK_{B}(I_{B}, K), the user apparatus may generate information K(I_{B}) by enciphering I_{B} with K and information PK_{B}(K) by enciphering K with PK_{B} and send these pieces of information to the institution A apparatus. The institution A apparatus sends PK_{B}(K) and K(I_{B}) to the institution B apparatus. The institution B apparatus deciphers the enciphered information PK_{B}(K) with its secret key SK_{B} to obtain the key information K and uses it to decipher the enciphered information K(I_{B}) to obtain the user information I_{B}.

Further, the institution A apparatus uses its secret key SK_{A} to add a signature of the institution A to information that is sent to the institution B apparatus to indicate thereto the registration of the user information with the institution A. The institution B apparatus verifies the validity of the signature contained in the information received from the institution A apparatus through the use of its public key PK_{A}; the institution B apparatus proceeds to decipherment only when the signature is found valid.

The confirmation of registration may be issued to the user apparatus by mail or telephone, for instance. In the case of sending such a notice of registration, especially, the signature of the institution B to the user apparatus:
the institution B apparatus generates registration confirming information SK_{B}(I_{B}) by attaching a digital signature to the user information IB through the use of the secret key SK_{B}, then generates information K(SK_{B}(I_{B})) by enciphering the registration confirming information with the user secret key K, and sends the enciphered information to the institution A apparatus;
the institution A apparatus generates information SK_{A}(I_{A}) indicative of the registration of the user information I_{A} by attaching thereto a digital signature through the use of the secret key SK_{A}, and sends the user apparatus the information SK_{A}(I_{A}) and the enciphered information K( SK_{B}(I_{B})) received from the institution B apparatus; and
the user apparatus obtains the registration confirming information SK_{B}(I_{B}) by deciphering the information K(SK_{B}(I_{B})) with the secret key K, then detects the signature SK_{A}(I_{A}) of the institution A corresponding to the user information I_{A} and the signature SK_{B}(I_{B}) of the institution B corresponding to the user information I_{B}, then verifies the validity of the signature SK_{A}(I_{A}) by the public key PK_{A} of the institution A and the user information I_{A} and the validity of the signature SK_{B}(I_{B}) by the public key PK_{B} and the user information I_{B}, and if they are both found valid, recognizes that the user information has been duly registered with either institution.

As described above, the present invention enables the user to register different information with a different institution simply by presenting thereto the required information without incurring the possibility of the information being revealed to other institutions.

### BRIEF DESCRIPTION OF THE INVENTION

Fig. 1 is a block diagram for explaining the principles of the method for registering information with a plurality of institutions according to the present invention;
Fig. 2 is a block diagram illustrating the functional configurations of a user apparatus, an institution A apparatus and an institution B apparatus according to an embodiment of the present invention;
Fig. 3 is a flowchart showing the procedure involved in the system configuration of Fig. 2;
Fig. 4 is a block diagram illustrating a modified form of the Fig. 2 embodiment;
Fig. 5 is a flowchart showing the procedure involved in the system configuration of Fig. 4;
Fig. 6 is a flowchart depicting a modification of the procedure in Fig. 3;
Fig. 7 is a flowchart depicting a modification of the procedure in Fig. 5;
Fig. 8 is a block diagram illustrating the configuration of an electronic cash system embodying the information registering method according to the present invention;
Fig. 9 is a block diagram depicting the configurations of a user apparatus, a bank apparatus and a cash issuer apparatus for user registration processing in the electronic cash system shown in Fig. 8;
Fig. 10 is a block diagram depicting the configurations of the user apparatus, the bank apparatus and the cash issuer apparatus for electronic cash issuance processing in the electronic cash system shown in Fig. 8;
Fig. 11 is a block diagram depicting the configurations of the user apparatus and a shop apparatus for electronic cash payment processing in the electronic cash system shown in Fig. 8; and
Fig. 12 is a block diagram depicting the configurations of the bank apparatus and the cash issuer apparatus for settlement processing in the electronic cash system.

### DETAILED DESCRIPTION OF THE PREFERRED EMBODIMENT

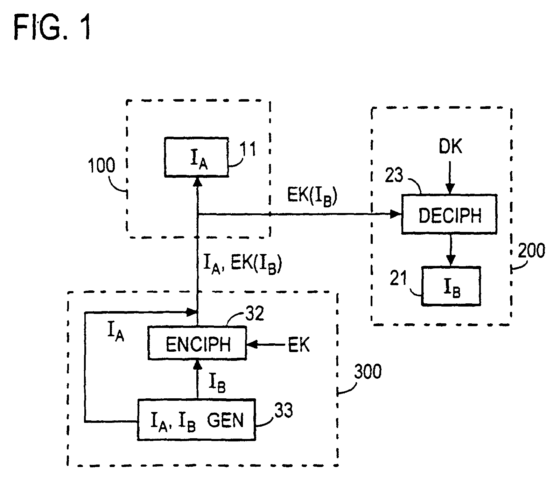

A description will be given, with reference to Fig. 1, of the principles of the method for registering user information with a plurality of institutions according to the present invention.

An institution A apparatus 100, an institution B apparatus 200 and a user apparatus 300 are interconnected, for example, via communication lines, but they may be connected using a smart card or the like on which information can be recorded.

The system configuration of the present invention is based on the premise that at least institution B apparatus 100 prepares a pair of secret and public keys SK_{B} and PK_{B} and provides the public key PK_{B} to the user apparatus 300. A user U uses an information generating part 33 of the user apparatus 300 to generate information I_{A} for registration with the institution A apparatus 100 and information I_{B} for registration with the institution B apparatus 200. Further, the user U uses an encipher key EK to encipher the information I_{B} in an enciphering part 32 to obtain information EK(I_{B}). The user U sends the information I_{A} and the enciphered information EK(I_{B}) to the institution A apparatus 100, which registers the information I_{A} in a memory 11 in correspondence to the user U and then sends the enciphered information EK(I_{B}) to the institution B apparatus 200. The institution B apparatus 200 deciphers the received enciphered information PK_{B}(I_{B}) with a decipher key DK in a deciphering part 23 to obtain the information IB, and registers it in a memory 21 in correspondence to the user U.

In the system of Fig. 1 there are two ways of conducting encipherment of the information I_{B} by the enciphering part 32 of the user apparatus 300 and decipherment of the enciphered information EK(I_{B}) by the deciphering part 23 of the institution B apparatus 200 as seen from the embodiments described later on. First, the user apparatus 300 enciphers the information I_{B} by using, as the encipher key EK, the public key PK_{B} of the institution B apparatus 200 to obtain information PK_{B}(I_{B}), and sends it to the institution A apparatus 100 together with the information I_{A}, and the institution B apparatus 200 deciphers the enciphered information PK_{B}(I_{B}) by using the secret key SK_{B} as the decipher key DK to obtain the information I_{B}. Second, the user apparatus 300 generates information K(I_{B}) by using its generated common key K as the encipher key EK and enciphers the common key K with the public key PK_{B} of the institution B apparatus 200 into PK_{B}(I_{B}), and sends these pieces of information PK_{B}(I_{B}) and K(I_{B}) to the institution A apparatus 100 together with the information I_{A}, and the institution B apparatus 200 deciphers the enciphered information PK_{B}(I_{B}) with the secret key SK_{B} to obtain the common key and deciphers the information K(I_{B}) with the key K to obtain the information I_{B}. Accordingly, the institution A cannot get acquainted with the information I_{B} registered with the institution B in correspondence to the user U nor can the institution B get acquainted with the information I_{A} registered with the institution A in correspondence to the user U.

### EMBODIMENT 1

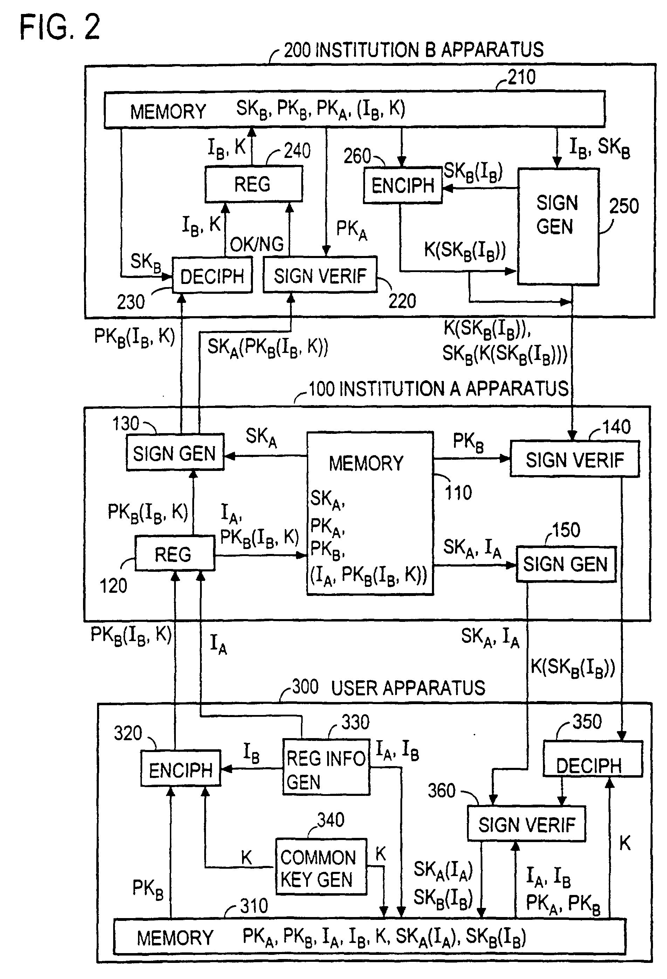

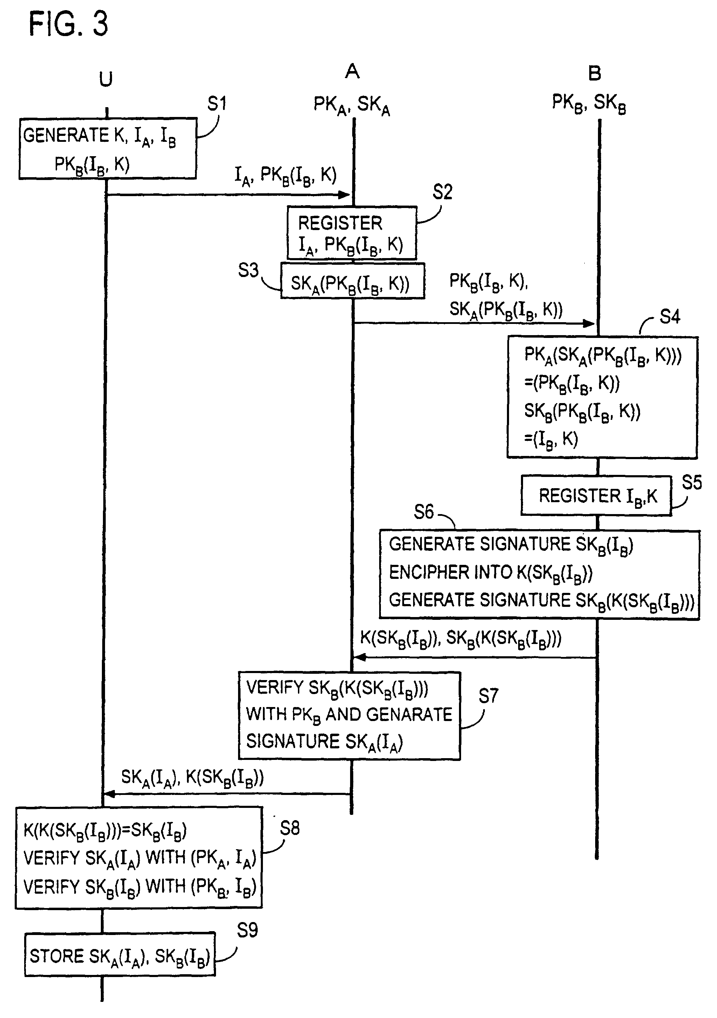

Fig. 2 illustrates in block form an example of the system configuration for implementing the registration of user information with a plurality of institutions according to the present invention. Fig. 3 depicts procedures for registering the user information with the institutions A and B in the system configuration of Fig. 2.

This embodiment is based on the premise that the institution A apparatus 100 prepares the secret key SK_{A} and the public key PK_{A} for a public key cryptosystem and a digital signature system (see, for example, Ikeno and Koyama, "Modern Cryptology," Institute of Electronics, Information and Communication Engineers of Japan) and provides the public key PK_{A} to the user apparatus 300, and that the institution B apparatus 200 similarly prepares the secret key SK_{B} and the public key PK_{B} and provides the latter to the user apparatus 300.

Step S1: The user U uses an information generating part 330 of the user apparatus 300 to generate the information I_{A} for registration with the institution A apparatus 100 and the information I_{B} for registration with the institution B apparatus 200. Further, the user U uses a common key generating part 340 to generate the common key K and an enciphering part 320 to encipher the information I_{A} and the common key K with the public key PK_{B} to generate information PK_{B}(I_{B}, K), and sends the pieces of information I_{A} and PK_{B}(I_{B}, K) to the institution A apparatus 100.

Step S2: The institution A apparatus 100 uses a registration part 120 to store the information I_{A} and PK_{B}(I_{B}, K) in the memory 110.

Step S3: Further, the institution A apparatus 100 uses a signature generating part 130 to attach a signature SK_{A}(PK_{B}(I_{B}, K)) to the enciphered information PK_{B}(I_{B}, K) through the use of the secret key SK_{A}, and sends the information SK_{A}(PK_{B}(I_{B}, K)) and PK_{B}(I_{B}, K) to the institution B apparatus 200.

Step S4: The institution B apparatus 200 uses a signature verification part 220 to decipher the signature SK_{A}(PK_{B}(I_{B}, K)) of the institution A with the public key PK_{A}, and makes a check to see if the resulting information PK_{B}(I_{B}, K)) matches the information PK_{B}(I_{B}, K) received from the institution A. If they do not match each other, the received information will be abandoned.

When they match each other, the received information PK_{B}(I_{B}, K) is deciphered using the secret key SK_{B} in a deciphering part 230 to extract the information I_{B} and the common key K.

Step S5: The institution N stores the thus obtained information I_{B} and K in a memory 210 through a registration part 240.

Step S6: Further, the institution B generates a signature SK_{B}(I_{B}) for the information I_{B} by a signature generating part 250 through the use of the secret key SK_{B}, then enciphers the signature SK_{B}(I_{B}) with the common key K by a ciphering part 260 to generate information K(SK_{B}(I_{B})), then generates signature information SK_{B}(K(SK_{B}(I_{B}))) of the institution B for the enciphered information (SK_{B}(I_{B})) by the signature generating part 250, and sends the enciphered information K(SK_{B}(I_{B})) and the signature information SK_{B}(K(SK_{B}(I_{B}))) to the institution A apparatus 100.

Step S7: The institution A apparatus 100 uses a signature verification part 140 to verify the validity of the signature SK_{B}(K(SK_{B}(I_{B}))) of the institution B with the public key PK_{B}. If the signature SK_{B}(K(SK_{B}(I_{B}))) is found invalid, the received information will be abandoned or destroyed.

When the signature SK_{B}(K(SK_{B}(I_{B}))) is found valid, the institution A generates signature information SK_{A}(I_{A}) of the institution A for the user information I_{A} registered therewith, by a signature information generating part 150 through the use of a key K_{A}, and sends the signature information SK_{A}(I_{A}) and the information K(SK_{B}(I_{B})) to the user apparatus 300.

Step S8: The user apparatus 300 uses the common key K to decipher the enciphered information K(SK_{B}(I_{B})) by a deciphering part 350 to thereby extract the signature SK_{B}(I_{B}) of the institution B. The user apparatus 300 verifies the signatures SK_{A}(I_{A}) and SK_{B}(I_{B}) of the institutions A and B through the use of a pair of the public key PK_{A} of the institution A and the user information I_{A} and a pair of the public key PK_{B} of the institution B and the user information I_{B}, respectively. When either one of the signatures SK_{A}(I_{A}) and SK_{B}(I_{B}) is found invalid, the user apparatus 300 destroys both of them, and when the both signatures are found valid, the user apparatus stores them in a memory 310.

In the embodiment of Fig. 2, the purpose of attaching the signature of the institution A to the information PK_{B}(I_{B}, K) to be sent to the institution B through the use of the secret key SK_{A} is to enable the institution B to make sure that its received information SK_{A}(PK_{B}(I_{B}, K)) has been sent via a normal route, i.e. from the institution A. The institution B verifies the validity of the signed information PK_{B}(I_{B}, K) from the institution A by the use of the public key PKA, thereby making sure that the information PK_{B}(I_{B}, K) has been duly received from the institution A. If such a verification is unnecessary, however, the institution A may send to the institution B only the received information PK_{B}(I_{B}, K) intact with no signature attached thereto. Similarly, when there is no need for the institution A to make sure that its received information K(SK_{B}(I_{B})) has been received from the institution B, the institution B needs only to send to the institution A the information K(SK_{B}(I_{B}, K)) without attaching thereto its signature. The institution A sends the received information K(SK_{B}(I_{B}, K)) intact to the user U.

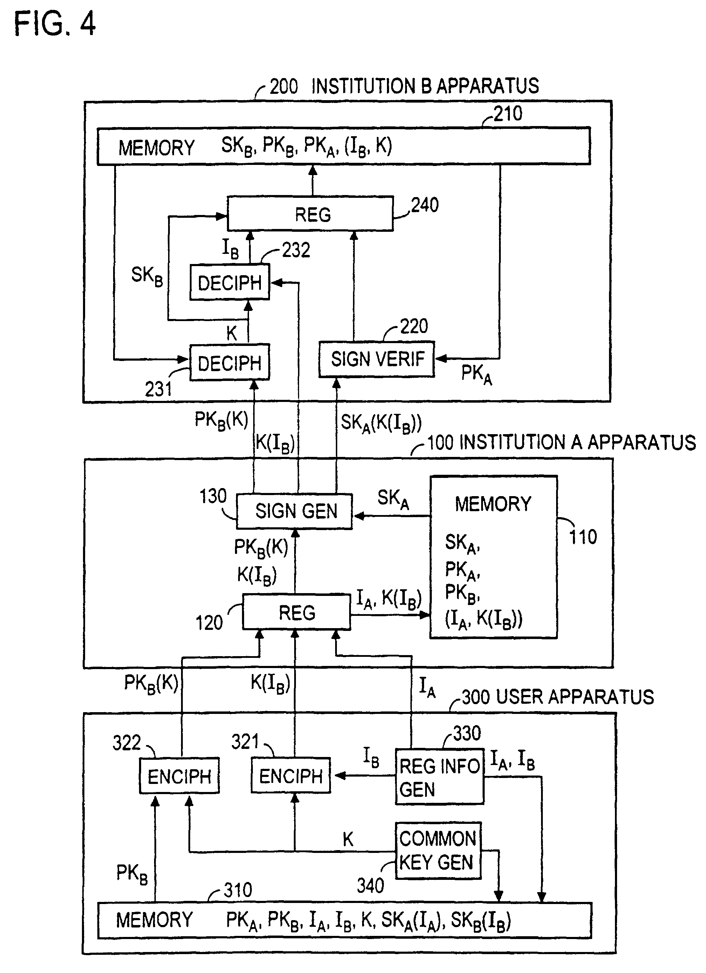

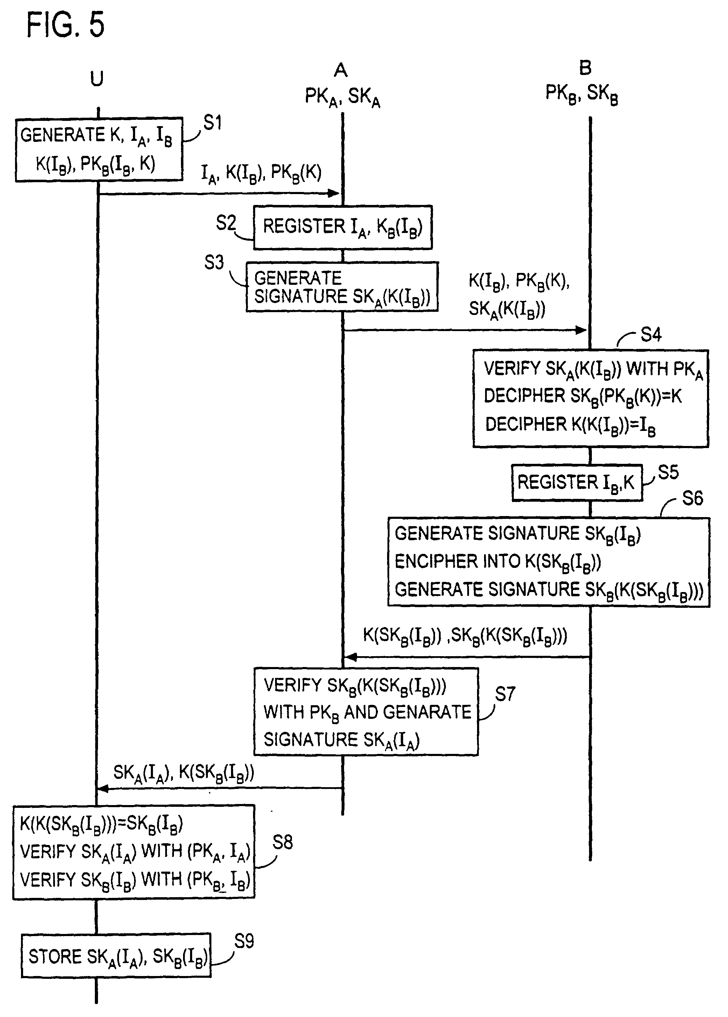

The embodiment of Fig. 2 described above may be modified as depicted in Fig. 4. A modified registration procedure is shown in Fig. 5 in correspondence to Fig. 3. In Fig. 4 the parts corresponding to those in Fig. 2 are identified by the same reference numerals. Instead of generating the enciphered information PK_{B}(I_{B}, K), the user apparatus 300 generates, in step S1, information K(I_{B}) by enciphering the information I_{B} with the key information K in an enciphering part 321 and information PK_{B}(K) by enciphering the key information K with the public key PK_{B} in an enciphering part 322, and sends these pieces of information K(I_{B}) and PK_{B}(K) to the institution A apparatus 100.

The institution A apparatus 100 stores, in step S2, the user information I_{A} in the memory 110 and stores therein the information K(I_{B}) in place of the information PK_{B}(I_{B}, K), and in step S3 attaches its signature to the information K(I_{B}) with the secret key SK_{A} in the signing part 130, thereafter sending the signature SK_{A}(K(I_{B})) and the pieces of information PK_{B}(K) and K(I_{B}) to the institution B apparatus 200.

The institution B apparatus 200 verifies, in step S4, the signature SK_{A}(K(I_{B})) with the key PK_{A} in the verification part 220. If the signature is found valid, the institution B apparatus 200 deciphers the information PK_{B}(K) with the secret key SK_{B} in a deciphering part 231 to obtain the key information K, and uses the key information K to decipher the information K(I_{B}) in a deciphering part 232 to obtain the information I_{B}. In step S5 the user information I_{B} and the key information K thus deciphered are stored in the memory 210.

In Fig. 4 there is omitted the procedure for sending the signatures SK_{A}(I_{A}) and SK_{B}(I_{B}) to the user U for indicating thereto the registration of the user information because the procedure is identical with that described above with reference to Figs. 2 and 3.

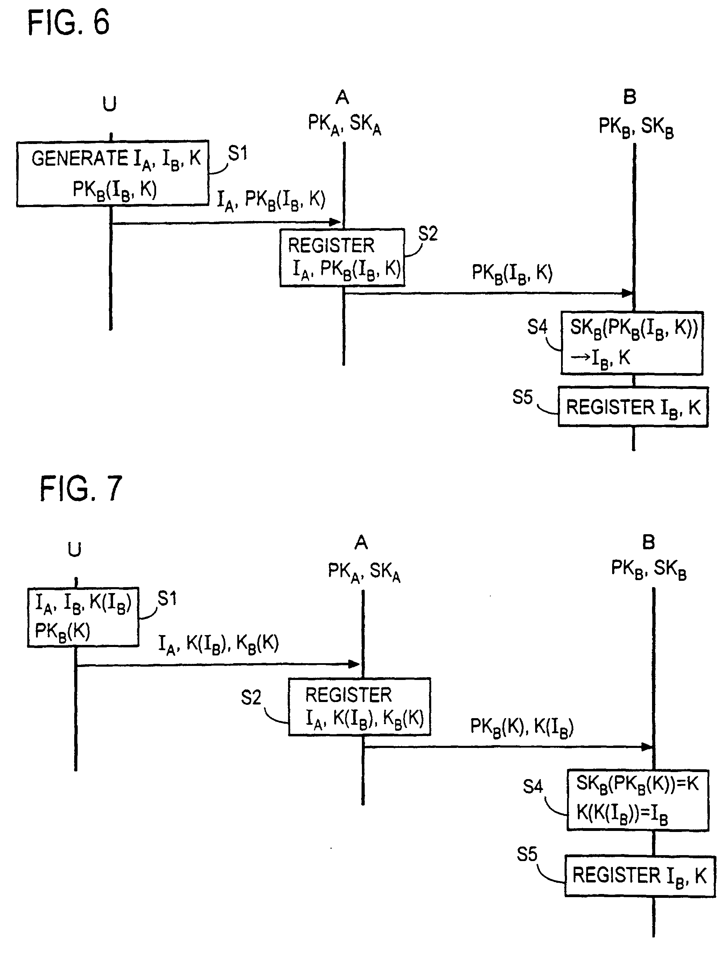

In the embodiments of Figs. 2 and 4 the institution A apparatus 100 has been described to send the enciphered information signed with the secret key SK_{A}, as information indicative of registration of the information I_{A}, to the institution B apparatus 200. If, however, the information I_{A} and the information I_{B} are merely registered with the institution A apparatus 100 and the institution B apparatus 200, respectively, without any possibility of the information registered with either of the institution apparatuses being revealed to the other, the signature by the secret key SK_{A} need not be sent to the institution B apparatus 200. That is, the signing in the signing part 130 in step S3 can be omitted; in the case of Fig. 3, only the information PK_{B}(I_{B},K) may sent to the institution B as depicted in Fig. 6, and in the case of Fig. 5, the information K(I_{B}) and PK_{B}(K) may be sent to the institution B as depicted in Fig. 7. Accordingly, in the cases of Figs. 6 and 7, the institution B does not verify the signature of the institution A in step S4, but instead it only obtains the information I_{B} and the key K by decipherment using the secret key SK_{B}.

Moreover, the pieces of user information I_{A} and I_{B} need only to be registered with the institution A apparatus 100 and the institution B apparatus B 200, respectively, and notice of registration may be served to the user U, for example, by mail or telephone, not electronically. In such an instance and when the user apparatus 200 does not require the signatures SK_{A}(I_{A}) and SK_{B}(I_{B}) of the institution A apparatus 100 and the institution B apparatus 200 that are attached to the information I_{A} and the information I_{B}, respectively, the signature verification parts 140 and 360, the signing parts 150 and 250, the enciphering part 260 and the deciphering part 350 in Fig. 2 and the associated processing can be omitted, and in the Fig. 2 embodiment the key information can be dispensed with. For example, in an electronic cash system the institution A apparatus 100 is a bank and the institution B apparatus 200 an electronic cash issuing institution; except in the case where the institution A apparatus 100 calls for information containing I_{B} so as to deal with an abuse of electronic cash, there is no need for registering the pieces of information PK_{B}(I_{B}, K) and K(I_{B}) with the institution A apparatus 100 in the examples of Figs. 2 and 4.

The institution A apparatus 100, the institution B apparatus 200 and the user apparatus 300 have the functional configurations shown in Figs. 2 and 3; their processing is computerized and a recording medium is used which has the program therefor recorded thereon.

### EMBODIMENT 2

Next, the present invention will be described as being applied to a hierarchical electronic cash system and an apparatus therefor.

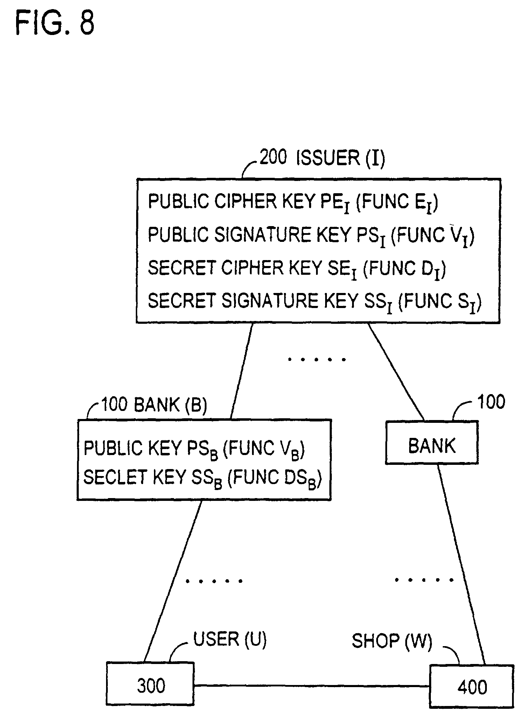

Fig. 8 illustrates an example of the system configuration to which this embodiment is applied. An apparatus of an electronic cash issuing institution (hereinafter referred to as an issuer I) 200, apparatuses of a plurality of institutions that manage user information (account information) and effect settlement of electronic cash with shops (hereinafter referred to simply as banks) 100, an apparatus of a person who has electronic cash issued (hereinafter referred to simply as a user) 300, and an apparatus of an institution that receives electronic cash from the user (hereinafter referred to simply as a shop) 400 are interconnected via communication lines or the like. These apparatuses may also be connected using a smart card.

The bank 100 makes public in advance a public key PS_{B} for digital signature that is set by a signature verification function V_{B} and the function V_{B}, and pregenerates a secret key SS_{B} that is set by a function S_{B}. The issuer 200 makes public beforehand a public encipher key PE_{I} that is set by a function E_{I} and a public key PS_{I} for digital signature that is set by a function V_{I}, and pregenerates a secret cipher key SE_{I} that is set by a function D_{I} and a secret signature key SS_{I} that is set by a function S_{I}. To make the cipher key PE_{I} public is based on the premise of making public the cipher function E_{I} that uses the public cipher key PE_{I}. Likewise, to make the key PS_{I} for digital signature public is based on the premise of making public the signature verification function V_{I}=V_{PSI} that uses the public key PS_{I}.

In this embodiment, when the user 300 requests the bank 100 to do a procedure for the issue of electronic cash of a face value X, the bank 100 withdraws the amount of money X from the account of the user 300 and sends the user's request to the issuer 200 after attaching a digital signature to the request to certify its validity. The issuer 200 verifies the validity of the request and issues electronic cash of the face value X to the user 300.

In this instance, the user 300 generates, as electronic cash issuance request information, information that contains a signature verification key N_{U} necessary for the verification of a signature of the user in the procedure for his payment of electronic cash to a shop. And the user 300 follows the procedure in Embodiment 1 to register his real name with the bank 100 in correspondence to his account and the signature verification key N_{U} with the electronic cash issuing institution 200.

### (A) User Registration Procedure

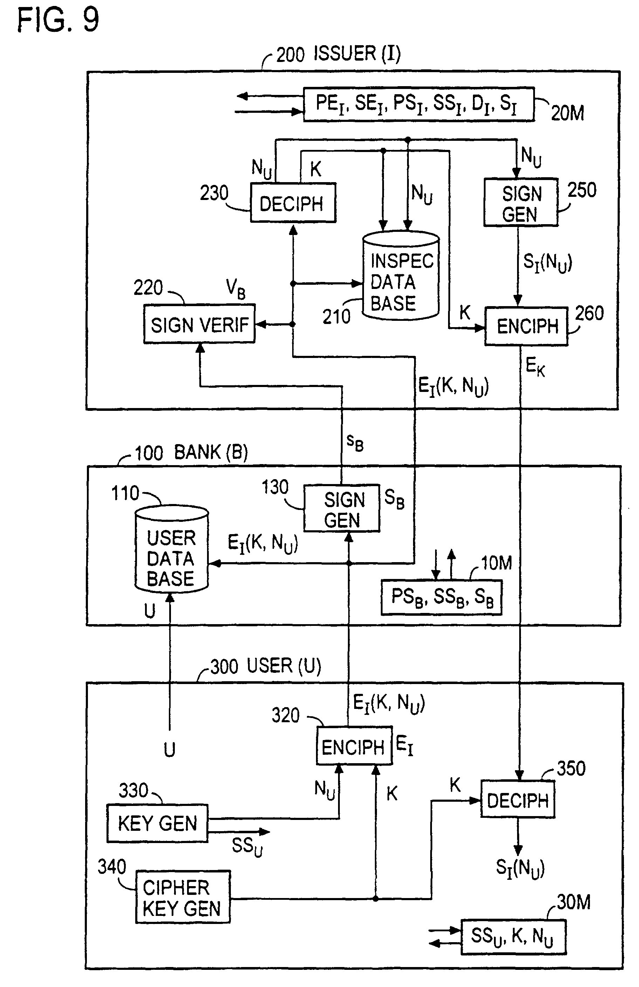

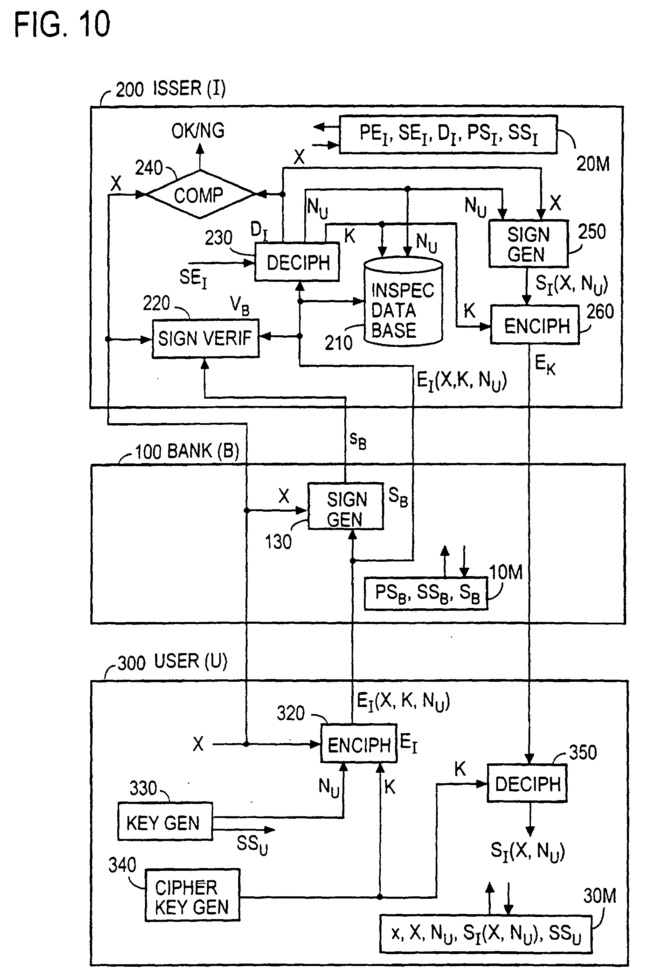

Step 1: A description will be given first, with reference to Fig. 9 depicting functional blocks of the user 300, the bank 100 and the issuer 200, of a procedure for the user 300 to register his information with the bank 100 and the issuer 200. The user 300 uses a digital signature key generating part 330 to generate a signature generating key SS_{U}, that is, a signature generating function S_{U} and a signature verification key N_{U}. Further; the user 300 generates a cipher key K, using a cipher key generating part 340 for a common cipher key (see, for example, Ikeno and Koyama, "Modern Cryptology," Institute of Electronics, Information and Communication Engineers of Japan). The signature generating key SS_{U}, the signature verification key N_{U} and the cipher key K thus generated are held in a memory 30M (Fig. 10). Next, the user 300 calculates E_{I}(K, N_{U}) by means of an encipherment part 320 for calculating the cipher function E_{I}, and sends the calculated information to the bank 100 together with the user's name U.

Step S2: The bank 100 first makes sure that the user's name U corresponds to an authorized user having an account, and then records the user's name U and the information E_{I}(K, N_{U}) in a pair in a user data base 110.

Next, the bank 100 uses the signature function S_{B} in a signature generating part 130 to calculate its signature s_{B}=S_{B}(E_{I}, K, N_{U})) for the information E_{I}(K, N_{U}), and sends information {E_{I}(K, N_{U}), s_{B}} to the issuer 200.

Step S3: The issuer 200 verifies the validity of the signature s_{B} sent from the bank 100, using the signature verification function V_{B} in a signature verification part 220. If the signature is found valid, the issuer 200 deciphers the information E_{I}(K, N_{U}) with the secret cipher key SE_{I} in a decipherment part 230, thereby obtaining the keys K and N_{U}. Next, the issuer 200 a signature S_{I}(N_{U}) for the key information N_{U} in a signature generating part 250, and stores the pieces of information N_{U} and E_{I}(K, N_{U}) in a pair in an inspection data base 210. Further, the issuer 200 uses the key K as an encipher key in an encipherment part 260 to encipher the signature S_{I}(N_{U}) into E_{K}(S_{I}(N_{U})), and sends it to the bank 100.

Step S4: The bank 100 sends the information E_{K}(S_{I}(N_{U})) to the user 300.

Step S5: The user 300 deciphers its received information E_{K}(S_{I}(N_{U})) with the key K in a decipherment part 350, thereby extracting the signature S_{I}(N_{U}) of the issuer 200. Here, let L={N_{U}, S_{I}(N_{U})} represent a license of the user U.

This registration procedure corresponds to that in the Fig. 3 embodiment. That is, the signature verification key N_{U} of the user U corresponds to the information I_{B} in Fig. 3 and the user's real name U to the information I_{A}. The bank 100 has knowledge of the correspondence between the enciphered information E_{I}(K, N_{U}) and the user U but cannot decipher the information E_{I}(K, N_{U}), and hence it will be unable to get acquainted with the keys K and N_{U} (that is, it will not be able to know the information I_{B}). On the other hand, the electronic cash issuing institution 200 knows that the bank 100 has the enciphered information E_{I}(K, N_{U}) but cannot get acquainted with its correspondence to the user U, and hence it will not be able to know the user's real name, that is, the information I_{A}.

### (B) Electronic Cash Issuing Procedure

Next, a description will be given, with reference to Fig. 10, of the procedure for the user to have electronic cash issued.

Incidentally, the issuer 200 holds secretly the secret key SE_{I} corresponding to the public cipher key PE_{I} and the decipher function D_{I}=D_{SEI} using the key SE_{I} in a memory 10M (Fig. 10) in correspondence to the cipher function E_{I} using the public key PE_{I}; that is, the issuer 200 holds the key SE_{I} in secret. Further, the issuer 200 holds secretly the signature generating function S_{I}=S_{SSI} using the secret key SS_{I} corresponding to the public cipher key PS_{I} in a memory 20M (Fig. 10) in correspondence to the signature verification function V_{I} using the public key PS_{I}; that is, the issuer 200 holds the key SS_{I} in secret. Similarly, the bank 100 holds secretly the signature generating function S_{B}=S_{SSB} using the secret key SS_{B} corresponding to the public key PS_{B} in the memory 10M in correspondence to the signature verification function V_{B} using the public key PS_{B}; that is, the bank 100 holds the key SS_{B} in secret.

The user 300 goes through the following procedure to ask the bank 100 to withdraw the amount of money X from his account so as to request the issue of electronic cash of the face value X.

Step S1: The user 300 reads out from the memory 30M the cipher key K, the signature generating key SS_{U}, the signature generating function S_{U} and the signature verification key N_{U} pregenerated by the user 300. Next, the user 300 generates, as a request for the issue of electronic cash, information E_{I}(X, K, N_{U}) obtained by enciphering (X, K, N_{U}) with the public encipher function E_{I} and the encipher key PE_{I} in the encipherment part 320, and sends the bank 100 a message for requesting it to withdraw the amount of money X from the account of the user U and the enciphered information E_{I}(X, K, N_{U}). The cipher key K is one that the issuer 200 uses to encipher return information S_{I}(X, N_{U}) addressed to the user 300 as described later on. Incidentally, it is desirable that this message be authenticated, for example, by the digital signature of the user U.

Step S2: The bank 100 checks the balance of the user U and reduces the balance by the amount of money X. Alternatively, the user's request for withdrawal may be recorded. The user's signature, if attached to his request, will be of particularly high probative value. The withdrawal from the user's account may be made at any time after checking the balance.

Next, the bank 100 calculates, in the signature generating part 130, its signature s_{B}=S_{B}(X, E_{I},(X, K, N_{U})) for the amount of money X and the information E_{I}(X, K, N_{U}) received as the electronic cash issuance request from the user 300, and sends information {S, E_{I}(X, K, N_{U}), s_{B}} to the issuer 200.

Step S3: The issuer 200 verifies the validity of the signature s_{B} received from the bank 100, using the signature verification function V_{B} in the signature verification part 220. If the signature is found valid, the issuer 200 deciphers the information E_{I}(X, K, N_{U}) with the secret cipher key SE_{I} in the decipherment part 230, obtaining the individual pieces of information X, K, and N_{U}. Next, the issuer 200 makes a check in a comparison part 240 to determine if the amount X received from the bank 100 and the amount X deciphered as mentioned above. If the information X is found valid, the issuer 200 generates, in the signature generating part 250, its signature S_{I}(X, N_{U}) for information (X, N_{U}) containing the key N_{U} for verifying the signature of the user 300.

Further, the issuer 200 records a set of pieces of information N_{U}, E_{I}(X, K, N_{U}) and K and information B of the bank 100 (its name or identification number) in the inspection data base 210 in correspondence to an initial value Y=0 of the total amount of money used Y.

Then, the issuer 200 enciphers its signature S_{I}(X, N_{U}) into information E_{K}(S_{I}(X, N_{U})), using the cipher key K in the encipherment part 260, and sends the enciphered information E_{K}(S_{I}(X, N_{U})) to the bank 100.

Step S4: The bank 100 sends the user 300 the enciphered information E_{K}(S_{I}(X, N_{U})) received from the issuer 200.

Step S5: The user 300 uses the key K in the decipherment part 350 to decipher the received information E_{K}(S_{I}(X, N_{U})), obtaining the signature S_{I}(X, N_{U}) of the issuer 200.

In this instance, letting the initial value of the balance x of electronic cash be represented by x=X, information C={x, X, N_{U}, S_{I}(N_{U}), S_{I}(X, N_{U})} is stored as electronic cash of the amount X in the memory 30M, together with the key information SSU. The electronic cash C will hereinafter be called electronic cash issued from the issuer 200.

While in this embodiment the user 300 has been described to generate the signature verification key N_{U}, it may also be generated by a different institution, for example, by the issuer 200. In such an instance, the user 300 sends information EI(X, K) to the bank 100. The bank 100 processes the information in the same manner as is the case with the information E_{I}(X, K, N_{U}) and the issuer 200 also performs processing in the same manner as in the above, thereby verifying the validity of the signature attached to the information (X, E_{I}(X, K)) and deciphers it to obtain X and K. After this, the issuer 200 generates the signature verification key N_{U} and processes X and N_{U} in the same manner as in the above, and sends E_{K}(N_{U}) to the user 300 via the bank 100.

### (C) Payment of Electronic Cash

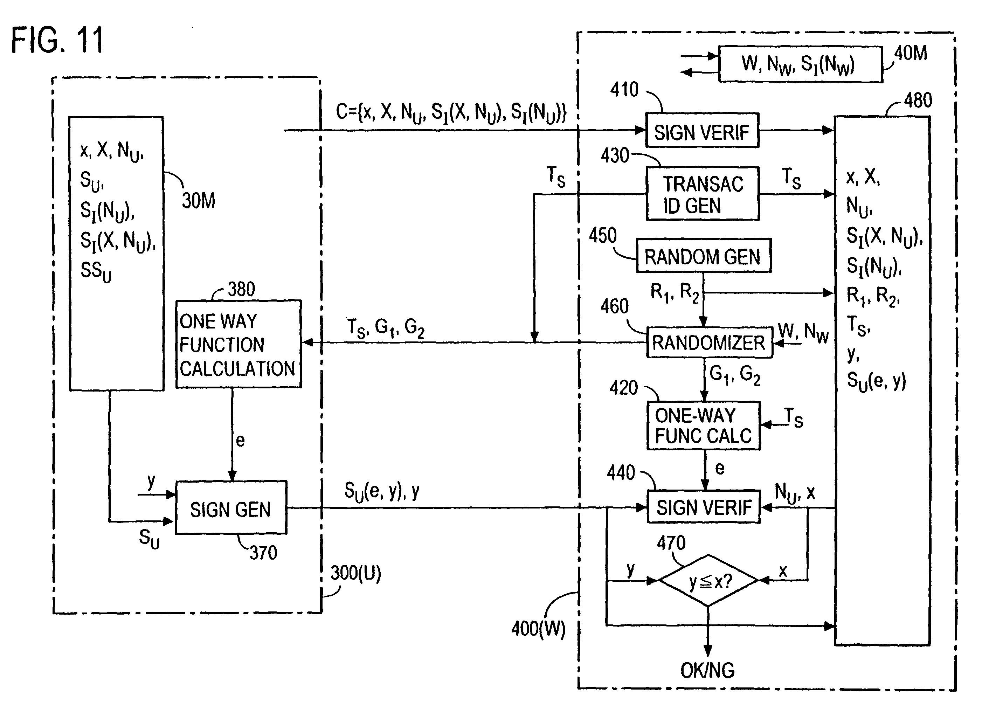

Next, A description will be given, with reference to Fig. 11, of the procedure for the user 300 to pay an amount of money y (where y≤x) to the shop 400 with the electronic cash C of the face value X and the balance x.

Step S1: The user 300 sends the shop 400 the electronic cash C={x, X, N_{U}, S_{I}(X, N_{U}), S_{I}(N_{U})} read out of the memory 30M.

Step S2: The shop 400 verifies the validity of the issuer's signatures S_{I}(N_{U}) and S_{I}(X, N_{U}) in a signature verification part 410 using the public key PS_{I} for verification of the signature of the issuer 200. If they are found valid, the shop 400 generates random numbers R₁ and R₂ in a random generating part 450, then generates in a randomizing part 460 a value G₁ obtained by randomizing information W corresponding to the shop 400 with the random number R₁ and a value G₂ obtained by randomizing a signature verification key N_{W} with the random number R₂, and sends these values G₁ and G₂ to the user 300 along with a transaction identifier T_{S} generated in a transaction identifier generating part 430. The transaction identifier T_{S} is, for example, information containing the date and time of transaction.

Step S3: The user 300 receives the transaction identifier T_{S} and the values G1 and G1 in a one-way function calculating part 380 to obtain a function e=f(T_{S}, G₁, G₂), then generates a user signature S_{U}(e, y) for the function e and the amount of money y to be paid in a signature generating part 370, and sends the user signature and the amount of money y to the shop 400.

Step S4: As is the case with the user 300, the shop 400 calculates the function e from the transaction identifier T_{S} and the values G₁ and G₂ in a one-way function calculating part 420, then verifies the validity of the user signature S_{U}(e, y) in a signature verification part 440 through the use of the signature verification key N_{U} received from the user 300, and makes a check in a comparison part 470 to see if y≤x. If both of them are found valid, the shop 400 admits or acknowledges payment with the electronic cash in the amount y concerned, and stores all communication data H={x, X, N_{U}, S_{I}(N_{U}), S_{I}(X, N_{U}), T_{S}, G₁, G₂, R₁, R₂, y, S_{U}(e, y)} in a memory 480.

### (D) Settlement

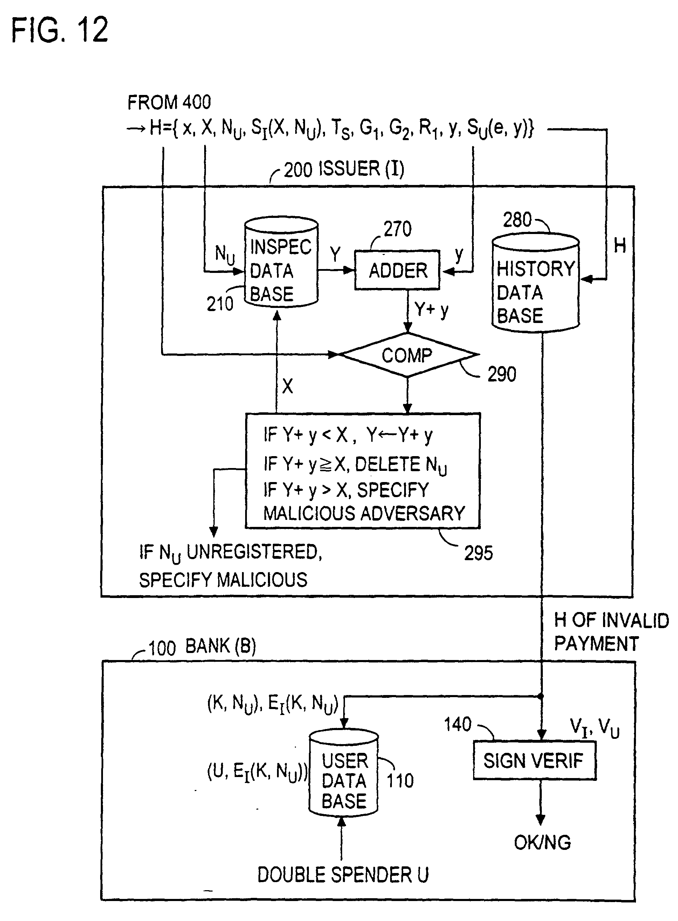

A description will be given finally, with reference to Fig. 12, of a method for the settlement of accounts between the shop 400 and the bank 100.

Step S1: The shop 400 sends the issuer 200 all the communication data H={x, X, N_{U}, S_{I}(N_{U}), S_{I}(X, N_{U}), T_{S}, G₁, G₂, R₁, R₂, y, S_{U}(e, y)} between the user 300 and the shop 400.

Step S2: A decision/control part 295 of the issuer apparatus 200 makes a check to see if the signature verification key N_{U} for the user 300 contained in the communication data H is stored in the inspection data base 210. When (X, N_{U}) is not stored in the inspection data base 210, the issuer 200 considers that the user 300 has made an invalid payment, and begins a malicious adversary specifying procedure. When (X, N_{U}) is stored, the issuer 200 calculates in an adding part 270 a total amount of money used, Y+y, corresponding to (X, N_{U}), then compares the total value Y+y with the face value X in a comparison part 290, and performs the following processing based on the result of comparison.
(a) If the total value Y+y is smaller than the face value X, the shop 400 will request the bank 100 to pay the money y into its bank account. In this case, the bank that has the account of the shop 400 need not always be the bank 100 with which the user 300 has his account. The issuer 200 updates the total value Y in the inspection data base 210 with Y+y, and stores the communication data H in a history data base 280.
(b) If Y+y=X, the shop 400 will request the bank 100 to pay the money y into its bank account. And since the electronic cash has been spent in full, the issuer 200 deletes the information (X, N_{U}) and the corresponding total amount Y from the inspection data base 210.
(c) If Y+y>X, the issuer 200 deletes the information (X, N_{U}) and the corresponding total amount Y from the inspection data base 210; in this case, too, the issuer 200 considers that an invalid payment by the user 300 has been made, and performs the malicious adversary specifying procedure.

Step S3: In the malicious adversary specifying procedure, the issuer 200 sends, prior to the deletion of the information (X, N_{U}), the bank 100 information as evidence of the malicious play (all communication data H concerning the invalid payment) read out of the history data base 280 and the pieces of information (K, N_{U}) and E_{I}(K, N_{U}) read out of the inspection data base 210. The bank 100 verifies the validity of the evidence of the malicious play (all the communication data H concerning the invalid payment) with the signature verification key N_{U} in the signature verification part 140. If the evidence is valid, the bank 100 will specifies the malicious user U from the user data base 110, using the enciphered information E_{I}(K, N_{U}) as a key.

In Embodiment 2 described above, it is possible, in general, to convert a given function g to g(X, N_{U})=n or {g(X), g(N_{U})}=n and use the n as a value corresponding to (X, N_{U}). That is, the above-described embodiment employs an identity function as the function g. Further, the information E_{I}(X, K, N_{U}) may be considered as a combination of the pieces of information E_{I}(X, K) and E_{I}(N_{U}).

### EFFECT OF THE INVENTION

As described above, according to the present invention, when the user sends pieces of information PK_{B}(I_{B}) and I_{A} or PK_{B}(K), K(I_{B}) and I_{A} to the institution A apparatus (a bank, for instance) from the user apparatus, the user information I_{A} is registered with the institution A apparatus, then the information containing I_{B} is sent therefrom to the institution B apparatus without any risk of the user information I_{B} being revealed to the institution A apparatus and is registered with the institution B apparatus. Accordingly, the user needs not to perform processing for individual registration of user information with the institution A apparatus and the institution B apparatus; hence, the registration processing is simple.

Further, the institution A apparatus attaches its signature to the information received from the user apparatus and sends the signed information to the institution B apparatus. The institution B apparatus verifies the validity of the signature attached to the information received from the institution A apparatus. When the signature is found valid, it can be recognized that the institution A apparatus has already registered the information I_{A} received from the user apparatus.

With the present invention applied to the electronic cash issuing procedure, the user needs only to perform a single procedure through a bank to register his real name U with the bank without any risk of the name being revealed to the issuer and the user signature verification key NU with the issuer without any risk of the key being revealed to the bank.

It will be apparent that many modifications and variations may be effected without departing from the scope of the novel concepts of the present invention.

## Claims

1. A method by which a user registers different pieces of information with institutions A and B, respectively, in an electronic cash system, and said institution B pregenerates a public key PK_{B} and secret key SK_{B} and provides said public key PK_{B} to said user, said method comprising the steps wherein:
(a) said user generates pieces of information I_{A} and I_{B} to be registered with said institutions A and B, respectively;
(b) said user generates a common cipher key K, enciphers said information I_{B} with the common cipher key K to obtain enciphered information K(I_{B}), enciphers said common cipher key K with said public key PK_{B} to obtain information PK_{B}(K) and sends said information I_{A} and said enciphered pieces of information K(I_{B}) and PK_{B}(K) to said institution A;
(c) said institution A registers said information I_{A} as information corresponding to the real name of said user, and sends said pieces of information K(I_{B}) and PK_{B}(K) to said institution B; and
(d) said institution B deciphers the information PKB(K) with said secret key SK_{B} to obtain said common cipher key K and deciphers the information K(I_{B}) with said common cipher key K to obtain said information I_{B}, and registers it.

2. The method of claim 1, which further comprises a step wherein said institution A pregenerates a public key PK_{A} and a secret key SK_{A} and makes said public key PK_{A} public, and in which:
said step (c) includes a step of generating a signature SK_{A}(K(I_{B})) of said institution A for said information K(I_{B}) contained in the information received from said user, and sending said signature SK_{A}(K(I_{B})) to said institution B, together with said pieces of information PK_{B}(K) and K(I_{B}); and
said step (d) includes a step of verifying, with said public key PK_{A}, the validity of said signature SK_{A}(K(I_{B})) in information received from said institution A and, if said signature is found valid, deciphering said information PK_{B}(K).

3. The method of claim 1 or 2, which further comprises the steps wherein:
said institution B:
(1) registers said deciphered common cipher key K together with said information I_{B};
(2) generates a digital signature SK_{B}(I_{B}) for said information I_{B} through the use of said secret key SK_{B};
(3) generates information K(SK_{B}(I_{B})) by enciphering said digital signature SK_{B}(I_{B}) with said common cipher key K;
(4) generates a signature SK_{B}(K(SK_{B}(I_{B}))) of said institution B for said information K(SK_{B}(I_{B})); and
(5) sends said information K(SK_{B}(I_{B})) and said signature SK_{B}(K(SK_{B}(I_{B}))) therefor .to said institution A;
said institution A:
(6) verifies the validity of said signature SK_{B}(K(SK_{B}(I_{B}))) in information received from said institution B, through the use of said public key PK_{B};
(7) if said signature SK_{B}(K(SK_{B}(I_{B}))) is found valid, generates a digital signature SK_{A}(I_{A}) for said information I_{A}; and
(8) sends said digital signature SK_{A}(I_{A}) and said information K(SK_{B}(I_{B})) received from said institution B to said user; and
said user:
(9) deciphers said information K(SK_{B}(I_{B})) in information received from said institution A through the use of said common cipher key, thereby obtaining said digital signature SK_{B}(I_{B}); and
(10) verifies the validity of said signatures SK_{A}(I_{A}) and SK_{B}(I_{B}) and, if they are both found valid, recognizes that said pieces of information I_{A} and I_{B} have been registered with said institution A and said institution B, respectively.

4. The method of 1 or 2, wherein said institution A also registers information containing said information I_{B} in said information received from said user.

5. The method of claim 1 or 2, which further comprises the steps wherein:
said institution B:
(1) registers said deciphered common cipher key K together with said information I_{B};
(2) generates a digital signature SK_{B}(I_{B}) for said information I_{B} through the use of said secret key SK_{B};
(3) enciphers said digital signature SK_{B}(I_{B}) with said common cipher key K, thereby obtaining information K(SK_{B}(I_{B})); and
(4) sends said information K(SK_{B}(I_{B})) to said institution A;
said institution A:
(5) sends said information K(SK_{B}(I_{B})) received from said institution B to said user; and said user:
(7) deciphers said information K(SK_{B}(I_{B})) from said institution A with said common cipher key K, thereby obtaining said digital signature SK_{B}(I_{B}) of said institution B for said information I_{B}; and
(8) verifies the validity of said digital signature SK_{B}(I_{B}) with said public key PK_{B} and, if said digital signature SK_{B}(I_{B}) is found valid, recognizes that said information I_{B} has been registered with said institution B.

6. A user apparatus in an electronic cash system in which a user registers different pieces of information I_{A} and I_{B} with institutions A and B, respectively, using the method of claim 1, said user apparatus comprising:
a memory (310) for storing a public key PK_{B} of said institution B;
common key generating means (340) for generating a common cipher key K and for storing it in said memory (310); ,
information generating means (330) for generating said information I_{A} for registration with said institution A and said information I_{B} for registration with said institution B and for storing said pieces of information I_{A} and I_{B} in said memory (310);
first encipher means (322) for enciphering said common cipher key K with said public key PK_{B} to generate information PK_{B}(K);
second encipher means (321) for enciphering said information I_{B} with said common cipher key K to generate information K(I_{B});
means for sending said pieces of information PK_{B}(K), K(I_{B}) and I_{A} to said institution A;
decipher means (350) for deciphering information K(SK_{B}(I_{B})) received from said institution A to obtain a signature SK_{B}(I_{B}); and
signature verification means (360) for verifying the validity of said signature SK_{B}(I_{B}) with said public key PK_{B} and said information I_{B}.

7. The apparatus of claim 6, wherein said memory (310) holds a public key PK_{A} of said institution A and said signature verification means (360) includes means for verifying the validity of a signature SK_{A}(I_{A}) received from said institution A through the use of said public key PK_{A} and said information I_{A}.

8. An electronic cash system comprising
a user apparatus (300) comprising means for implementing steps (a) and (b) in the method of claim 1,
an institution A apparatus (100) comprising means for implementing step (c) in the method of claim 1, and
an institution B apparatus (200) comprising means for implementing step (d) in the method of claim 1.

9. The system of claim 8, wherein said institution A apparatus comprises:
a memory (110) for storing a public key PK_{B} of said institution B;
means for storing in said memory (110) said information I_{A} and pieces of information K(I_{B}) and PK_{B}(K) received from said user;
means for sending said pieces of information PK_{B}(K) and K(I_{B}) received from said user to said institution B; and
means for sending information K(SK_{B}(I_{B})) received from said institution B to said user.

10. The system of claim 9, wherein said memory (110) of said institution A apparatus holds a secret key SK_{A} and a public key PK_{A} of said institution A, the institution A apparatus further comprising signing means (130) for signing said information K(I_{B}) received from said user through the use of said secret key SK_{A} to thereby obtain signature information SK_{A}(K(I_{B})), wherein said sending means is adapted to send said signature information SK_{A}(K(I_{B})) to said institution B together with said pieces of information K(I_{B}) and PK_{B}(K).

11. The system of claim 9 or 10, wherein said institution A apparatus further comprises signature verification means (140) for verifying, through the use of said public key PK_{B}, the validity of each of said information K(SK_{B}(I_{B})) and its signature SK_{B}(K(SK_{B}(I_{B}))) received from said institution B.

12. The system of claim 9 or 10, wherein said institution A apparatus further comprises signing means (150) for signing said information I_{A} in said memory (110) with said secret key SK_{A} to thereby generate a signature SK_{A}(I_{A}), said signature SK_{A}(I_{A}) being sent to said user together with said information K(SK_{B}(I_{B})) received from said institution B.

13. The system according to any one of claims 8 to 12, wherein said institution B apparatus comprises:
a memory (210) for storing secret and public keys SK_{B} and PK_{B} of said institution B;
first decipher means (231) for deciphering information PK_{B}(K) from said institution A with said secret key SK_{B} to obtain a common cipher key K;
second decipher means (232) for deciphering information K(I_{B}) from said institution A with said common cipher key K;
means for storing said deciphered information I_{B} and said common cipher key K in said memory (210);
signing means (250) for signing said information I_{B} in said memory with said secret key SK_{B} to obtain a signature SK_{B}(I_{B});
encipher means (260) for enciphering said signature SK_{B}(I_{B}) with said common cipher key K to generate information K(SK_{B}(I_{B})); and
means for sending said information K(SK_{B}(I_{B})) to said institution A.

14. The system of claim 13, wherein said institution B apparatus further comprises signing means (250) for signing said information K(SK_{B}(I_{B})) with said secret key SK_{B} to generate signature information SK_{B}(K(SK_{B}(I_{B}))), said signature information SK_{B}(K(SK_{B}(I_{B}))) being sent to said institution A together with said information K(SK_{B}(I_{B})).

15. A recording medium having recorded thereon a program for execution by a computer of the user apparatus of claim 6 in the electronic cash system in which a user registers different pieces of information I_{A} and I_{B} with institutions A and B, respectively, said program comprising the steps of:
generating a common cipher key K;
generating said information I_{A} for registration with said institution A and said information I_{B} for registration with said institution B;
storing said common cipher key K and said pieces of information I_{A} and I_{B} in a memory;
enciphering said common cipher key K with a public key PK_{B} of said institution B to generate information PK_{B}(K);
enciphering said information I_{B} with said common cipher key K to obtain information K(I_{B});
sending said pieces of information I_{A}, PK_{B}(K) and K(I_{B}) to said institution A;
deciphering information K(SK_{B}(I_{B})) from said institution A with said common cipher key K to obtain a signature SK_{B}(I_{B}); and
verifying the validity of said deciphered signature SK_{B}(I_{B}) with said public key PK_{B} and said information I_{B}.

16. The recording medium according to claim 15, wherein said program further comprises a step of verifying the validity of a signature SK_{A}(I_{A}) from said institution A with its public key PK_{A} and said information I_{A}.

## Patentansprüche

1. Verfahren, mit dem ein Benutzer verschiedene Informationen bei Instituten A bzw. B in einem elektronischen Zahlungssystem registriert und das Institut B einen öffentlichen Schlüssel PK_{B} und einen geheimen Schlüssel SK_{B} vorerzeugt und dem Benutzer den öffentlichen Schlüssel PK_{B} bereitstellt und das Verfahren die Schritte aufweist, bei denen:
(a) der Benutzer Informationen I_{A} und I_{B} generiert, die bei den Instituten A bzw. B zu registrieren sind;
(b) der Benutzer einen gemeinsamen Chiffrierschlüssel K generiert, die Information I_{B} mit dem gemeinsamen Chiffrierschlüssel K verschlüsselt, um verschlüsselte Information K(I_{B}) zu erhalten, und den gemeinsamen Chiffrierschlüssel K mit dem öffentlichen Schlüssel PK_{B} chiffriert, um Information PK_{B}(K) zu erhalten, und die Information I_{A} und die verschlüsselten Informationen K(I_{B}) und PK_{B}(K) an das Institut A sendet;
(c) das Institut A die Information I_{A} als Information entsprechend dem wirklichen Namen des Benutzers registriert und die Informationen K(I_{B}) und PK_{B}(K) an das Institut B sendet; und
(d) das Institut B die Information PKB(K) mit dem geheimen Schlüssel SK_{B} entschlüsselt, um den gemeinsamen Chiffrierschlüssel K zu erhalten, und die Information K(I_{B}) mit dem gemeinsamen Chiffrierschlüssel K entschlüsselt, um die Information I_{B} zu erhalten, und dieses registriert.

2. Verfahren nach Anspruch 1, welches ferner einen Schritt aufweist, bei dem das Institut A einen öffentlichen Schlüssel PK_{A} und einen geheimen Schlüssel SK_{A} vorerzeugt und den öffentlichen Schlüssel PK_{A} öffentlich macht, und bei dem:
der Schritt (c) einen Schritt umfaßt, der eine Signatur (SK_{A}(K(I_{B})) des Instituts A für die Information K(I_{B}) generiert, die in der vom Benutzer empfangenen Information enthalten ist, und der diese Signatur SK_{A}(KI_{B})) zusammen mit den Informationen PK_{B}(K) und K(I_{B}) an das Institut B sendet; und
der Schritt (d) einen Schritt umfaßt, der mit dem öffentlichen Schlüssel PK_{A} die Gültigkeit der Signatur SK_{A}(K(I_{B})) in der vom Institut A empfangenen Information verifiziert und, wenn die Signatur für gültig erachtet wird, die Information PK_{B}(K) entschlüsselt.

3. Verfahren nach Anspruch 1 oder 2, welches ferner die Schritte aufweist, bei denen:
das Institut B:
(1) den entschlüsselten gemeinsamen Chiffrierschlüssel K zusammen mit der Information I_{B} registriert;
(2) eine digitale Signatur SK_{B}(I_{B}) für die Information I_{B} durch die Benutzung des geheimen Schlüssels SK_{B} generiert;
(3) Information K(SK_{B}(I_{B})) durch Verschlüsseln der digitalen Signatur SK_{B}(I_{B}) mit dem gemeinsamen Chiffrierschlüssel K generiert;
(4) eine Signatur SK_{B}(K(SK_{B}(I_{B}))) des Instituts B für die Information (K(SK_{B}(I_{B})) generiert; und
(5) die Information K(SK_{B}(I_{B})) und die Signatur SK_{B}(K(SK_{B}(I_{B}))) dafür an das Institut A sendet;
das Institut A:
(6) die Gültigkeit der Signatur SK_{B}(K(SK_{B}(I_{B}))) in vom Institut B empfangener Information durch die Benutzung des öffentlichen Schlüssels PK_{B} verifiziert;
(7) wenn die Signatur SK_{B}(K(SK_{B}(I_{B}))) für gültig erachtet wird, eine digitale Signatur SK_{A}(I_{A}) für die Information I_{A} generiert; und
(8) die digitale Signatur SK_{A}(I_{A}) und die vom Institut B empfangene Information K(SK_{B}(I_{B})) an den Benutzer sendet; und
der Benutzer:
(9) die Information K(SK_{B}(I_{B})) in vom Institut A empfangener Information durch die Benutzung des gemeinsamen Chiffrierschlüssels entschlüsselt und dadurch die digitale Signatur SK_{B}(I_{B}) erhält; und
(10) die Gültigkeit der Signaturen SK_{A}(I_{A}) und SK_{B}(I_{B}) überprüft und, wenn sich beide als gültig erweisen, erkennt, daß die Informationen I_{A} und I_{B} beim Institut A bzw. Institut B registriert worden sind.

4. Verfahren nach Anspruch 1 oder 2, bei dem das Institut A auch Information registriert, die die Information I_{B} in der vom Benutzer empfangenen Information enthält.

5. Verfahren nach Anspruch 1 oder 2, welches ferner die Schritte aufweist, bei denen:
das Institut B:
(1) den entschlüsselten gemeinsamen Chiffrierschlüssel K zusammen mit der Information I_{B} registriert;
(2) eine digitale Signatur SK_{B}(I_{B}) für die Information I_{B} durch die Benutzung des geheimen Schlüssels SK_{B} generiert;
(3) die digitale Signatur SK_{B}(I_{B}) mit dem gemeinsamen Chiffrierschlüssel K verschlüsselt und dadurch Information K(SK_{B}(I_{B})) erhält; und
(4) die Information K(SK_{B}(I_{B})) an das Institut A sendet;
das Institut A:
(5) die vom Institut B empfangene Information (K(SK_{B}(I_{B})) an den Benutzer sendet; und der Benutzer:
(7) die Information K(SK_{B}(I_{B})) vom Institut A mit dem gemeinsamen Chiffrierschlüssel K entschlüsselt und dadurch die digitale Signatur SK_{B}(I_{B}) des Instituts B für die Information I_{B} erhält; und
(8) die Gültigkeit der digitalen Signatur SK_{B}(I_{B}) mit dem öffentlichen Schlüssel PK_{B} überprüft und, wenn die digitale Signatur SK_{B}(I_{B}) für gültig erachtet wird, erkennt, daß die Information I_{B} bei dem Institut B registriert worden ist.

6. Benutzervorrichtung in einem elektronischen Zahlungssystem, bei dem ein Benutzer unter Anwendung des Verfahrens gemäß Anspruch 1 verschiedene Informationen I_{A} und I_{B} bei Instituten A bzw. B registriert, und die Benutzervorrichtung aufweist:
einen Speicher (310) zum Speichern eines öffentlichen Schlüssels PK_{B} des Instituts B;
eine Einrichtung (340) zum Erzeugen eines gemeinsamen Schlüssels, die einen gemeinsamen Chiffrierschlüssel K generiert und in dem Speicher (310) speichert;
eine Einrichtung (330) zum Erzeugen von Information, die die Information I_{A} zur Registrierung bei dem Institut A und die Information I_{B} zur Registrierung bei dem Institut B generiert und die Informationen I_{A} und I_{B} in dem Speicher (310) speichert;
eine erste Einrichtung (322) zum Verschlüsseln, die den gemeinsamen Chiffrierschlüssel K mit dem öffentlichen Schlüssel PK_{B} verschlüsselt, um Information PK_{B}(K) zu generieren;
eine zweite Einrichtung (321) zum Verschlüsseln, die die Information I_{B} mit dem gemeinsamen Chiffrierschlüssel K verschlüsselt, um Information K(I_{B}) zu generieren;
eine Einrichtung, die die Informationen PK_{B}(K), K(I_{B}) und I_{A} an das Institut A sendet;
eine Einrichtung (350) zum Entschlüsseln, die vom Institut A empfangene Information K(SK_{B}(I_{B})) entschlüsselt, um eine Signatur SK_{B}(I_{B}) zu erhalten; und
eine Einrichtung (360) zur Signaturüberprüfung, die die Gültigkeit der Signatur SK_{B}(I_{B}) mit dem öffentlichen Schlüssel PK_{B} und der Information I_{B} verifiziert.

7. Vorrichtung nach Anspruch 6, bei der der Speicher (310) einen öffentlichen Schlüssel PK_{A} des Instituts A bewahrt und die Einrichtung (360) zur Signaturüberprüfung Einrichtungen umfaßt, die die Gültigkeit einer vom Institut A empfangenen Signatur SK_{A}(I_{A}) durch die Benutzung des öffentlichen Schlüssels PK_{A} und der Information I_{A} verifiziert.

8. Elektronisches Geldzahlungssystem mit:
einer Benutzervorrichtung (300), die Einrichtungen zur Verwirklichung der Schritte (a) und (b) im Verfahren gemäß Anspruch 1 aufweist,
eine Institut-A-Vorrichtung (100), die Einrichtungen zur Verwirklichung von Schritt (c) im Verfahren gemäß Anspruch 1 aufweist, und
eine Institut-B-Vorrichtung (200), die Einrichtungen zur Verwirklichung von Schritt (d) im Verfahren gemäß Anspruch 1 aufweist.

9. System nach Anspruch 8, bei dem die Institut-A-Vorrichtung aufweist:
einen Speicher (110), der einen öffentlichen Schlüssel PK_{B} des Instituts B speichert;
eine Einrichtung, die in dem Speicher (110) die Information I_{A} und von dem Benutzer empfangene Informationen K(I_{B}) und PK_{B}(K) speichert;
eine Einrichtung, die die von dem Benutzer empfangene Informationen PK_{B}(K) und K(I_{B}) an das Institut B sendet; und
eine Einrichtung, die von dem Institut B empfangene Information K(SK_{B}(I_{B})) an den Benutzer sendet.

10. System nach Anspruch 9, bei dem der Speicher (110) der Institut-A-Vorrichtung einen geheimen Schlüssel SK_{A} und einen öffentlichen Schlüssel PK_{A} des Instituts A bewahrt, die Institut-A-Vorrichtung ferner eine Einrichtung (130) zum Unterzeichnen aufweist, welche die vom Benutzer empfangene Information K(I_{B}) durch die Benutzung des geheimen Schlüssels SK_{A} unterzeichnet, um dadurch Signaturinformation SK_{A}(K(I_{B})) zu erhalten, wobei die Einrichtung zum Senden beschaffen ist, die Signaturinformation SK_{A}(K(I_{B})) zusammen mit den Informationen K(I_{B}) und PK_{B}(K) an das Institut B zu senden.

11. System nach Anspruch 9 oder 10, bei dem die Institut-A-Vorrichtung ferner eine Einrichtung (140) zur Signaturüberprüfung aufweist, die durch die Benutzung des öffentlichen Schlüssels PK_{B} die Gültigkeit jeder der von dem Institut B empfangenen Information K(SK_{B}(I_{B})) und deren Signatur (SK_{B}(K(SK_{B}(I_{B}))) verifiziert.

12. System nach Anspruch 9 oder 10, bei dem die Institut-A-Vorrichtung ferner eine Einrichtung (150) zum Unterzeichnen aufweist, welche die Information I_{A} in dem Speicher (110) mit dem geheimen Schlüssel SK_{A} unterzeichnet, um dadurch eine Signatur SK_{A}(I_{A}) zu generieren, wobei die Signatur SK_{A}(I_{A}) zusammen mit der vom Institut B empfangenen Information K(SK_{B})I_{B})) an den Benutzer gesendet wird.

13. System nach einem der Ansprüche 8 bis 12, bei dem die Institut-B-Vorrichtung aufweist:
einen Speicher (210), der geheime und öffentliche Schlüssel SK_{B} und PK_{B} des Instituts B speichert;
eine erste Einrichtung (231) zum Entschlüsseln, die Information PK_{B}(K) von dem Institut A mit dem geheimen Schlüssel SK_{B} entschlüsselt, um einen gemeinsamen Chiffrierschlüssel K zu erhalten;
eine zweite Einrichtung (232) zum Entschlüsseln, die Information K(I_{B}) von dem Institut A mit dem gemeinsamen Chiffrierschlüssel K entschlüsselt;
eine Einrichtung, die die entschlüsselte Information I_{B} und den gemeinsamen Chiffrierschlüssel K in dem Speicher (210) speichert;
eine Einrichtung (250) zum Unterzeichnen, die die Information I_{B} in dem Speicher mit dem geheimen Schlüssel SK_{B} unterzeichnet, um eine Signatur SK_{B}(I_{B}) zu erhalten;
eine Einrichtung (260) zum Verschlüsseln, die die Signatur SK_{B}(I_{B}) mit dem gemeinsamen Chiffrierschlüssel K verschlüsselt, um Information K(SK_{B}(I_{B})) zu generieren; und
eine Einrichtung, welche die Information K(SK_{B}(I_{B})) an das Institut A sendet.

14. System nach Anspruch 13, bei dem die Institut-B-Vorrichtung ferner eine Einrichtung (250) zum Unterzeichnen aufweist, welche die Information K(SK_{B}(I_{B})) mit dem geheimen Schlüssel SK_{B} unterzeichnet, um Signaturinformation SK_{B}(K(SK_{B}(I_{B}))) zu generieren, wobei die Signaturinformation SK_{B}(K(SK_{B}(I_{B}))) zusammen mit der Information K(SK_{B}(I_{B})) an das Institut A gesandt wird.

15. Aufzeichnungsträger, auf dem ein Programm zur Ausführung mittels eines Rechners der Benutzervorrichtung gemäß Anspruch 6 in einem elektronischen Zahlungssystem aufgezeichnet ist, bei dem ein Benutzer verschiedene Informationen I_{A} und I_{B} bei Instituten A bzw. B registriert, und das Programm die Schritte aufweist:
Generieren eines gemeinsamen Chiffrierschlüssels K;
Generieren der Information I_{A} zur Registrierung beim Institut A und der Information I_{B} zur Registrierung beim Institut B;
Speichern des gemeinsamen Chiffrierschlüssels K und der Informationen I_{A} und I_{B} in einem Speicher;
Verschlüsseln des gemeinsamen Chiffrierschlüssels K mit einem öffentlichen Schlüssel PK_{B} des Instituts B zum Generieren von Information PK_{B} (K);
Verschlüsseln der Information I_{B} mit dem gemeinsamen Chiffrierschlüssel K, um Information K(I_{B}) zu erhalten;
Senden der Informationen I_{A}, PK_{B}(K) und K(I_{B}) an das Institut A;
Entschlüsseln der Information K(SK_{B}(I_{B})) vom Institut A mit dem gemeinsamen Chiffrierschlüssel K, um eine Signatur SK_{B}(I_{B}) zu erhalten; und
Überprüfen der Gültigkeit der entschlüsselten Signatur SK_{B}(I_{B}) mit dem öffentlichen Schlüssel PK_{B} und der Information I_{B}.

16. Aufzeichnungsträger gemäß Anspruch 15, bei dem das Programm ferner einen Schritt aufweist, der die Gültigkeit einer Signatur SK_{A}(I_{A}) von dem Institut A mit seinem öffentlichen Schlüssel PK_{A} und der Information I_{A} verifiziert.

## Revendications

1. Procédé au moyen duquel un utilisateur enregistre divers éléments d'informations auprès d'institutions A et B respectives, dans un système de paiement électronique, et ladite institution B génère à l'avance une clé publique PK_{B} et une clé secrète SK_{B} et fournit ladite clé publique PK_{B} audit utilisateur, ledit procédé comprenant les étapes dans lesquelles :
(a) ledit utilisateur génère des éléments d'informations I_{A} et I_{B} devant être respectivement enregistrés auprès desdites institutions A et B ;
(b) ledit utilisateur génère une clé de chiffrage commune K, chiffre lesdites informations I_{B} avec la clé de chiffrage commune K pour obtenir des informations chiffrées K(I_{B}), chiffre ladite clé de chiffrage commune K avec ladite clé publique PK_{B} pour obtenir des informations PK_{B}(K) et envoie lesdites informations I_{A} et lesdits éléments d'informations chiffrés K(I_{B}) et PK_{B}(K) à ladite institution A ;
(c) ladite institution A enregistre lesdites informations I_{A} en tant qu'informations correspondant au nom réel dudit utilisateur, et envoie lesdits éléments d'informations K(I_{B}) et PK_{B}(K) à ladite institution B ; et
(d) ladite institution B déchiffre les informations PK_{B}(K) avec ladite clé secrète SK_{B} pour obtenir ladite clé de chiffrage commune K et déchiffre les informations K(I_{B}) avec ladite clé de chiffrage commune K pour obtenir lesdites informations I_{B}, et les enregistre.

2. Procédé selon la revendication 1, comprenant en outre une étape dans laquelle ladite institution A génère à l'avance une clé publique PK_{A} et une clé secrète SK_{A} et rend publique ladite clé publique PK_{A}, et dans lequel :
ladite étape (c) comprend une étape consistant à générer une signature SK_{A}(K(I_{B})) de ladite institution A pour lesdites informations K(I_{B}) contenues dans les informations reçues dudit utilisateur, et à envoyer ladite signature SK_{A}(K(I_{B})) à ladite institution B, en association avec lesdits éléments d'informations PK_{B}(K) et K(I_{B}) ; et
ladite étape (d) comprend une étape consistant à vérifier, avec ladite clé publique PK_{A}, la validité de ladite signature SK_{A}(K(I_{B})) dans les informations reçues de ladite institution A et, s'il est trouvé que ladite signature est valide, déchiffrer lesdites informations PK_{B}(K).

3. Procédé selon la revendication 1 ou 2, comprenant en outre les étapes dans lesquelles :
ladite institution B :
(1) enregistre ladite clé de chiffrage commune déchiffrée K en association avec lesdites informations I_{B};
(2) génère une signature numérique SK_{B}(I_{B}) pour lesdites informations I_{B} par utilisation de ladite clé secrète SK_{B} ;
(3) génère des informations K(SK_{B}(I_{B})) en chiffrant ladite signature numérique SK_{B}(I_{B}) avec ladite clé de chiffrage commune K ;
(4) génère une signature SK_{B}(K(SK_{B}(I_{B}))) de ladite institution B pour lesdites informations K(SK_{B}(I_{B})) ; et
(5) envoie lesdites informations K(SK_{B}(I_{B})) et ladite signature SK_{B}(K(SK_{B}(I_{B}))) qui leur correspond à ladite institution A ;
ladite institution A :
(6) vérifie la validité de ladite signature SK_{B}(K(SK_{B}(I_{B}))) dans les informations reçues de ladite institution B, par utilisation de ladite clé publique PK_{B} ;
(7) si ladite signature SK_{B}(K(SK_{B}(I_{B}))) est trouvée valide, génère une signature numérique SK_{A}(I_{A}) pour lesdites informations I_{A} ; et
(8) envoie ladite signature SK_{A}(I_{A}) et lesdites informations K(SK_{B}(I_{B})) reçues de ladite institution B audit utilisateur ; et
ledit utilisateur :
(9) déchiffre lesdites informations K(SK_{B}(I_{B})) dans les informations reçues de ladite institution A par utilisation de ladite clé de chiffrage commune, obtenant ainsi ladite signature numérique SK_{B}(I_{B}) ; et
(10) vérifie la validité desdites signatures SK_{A}(I_{A}) et SK_{B}(I_{B}) et, s'il est trouvé qu'elles sont toutes deux valides, constate que lesdits éléments d'informations I_{A} et I_{B} ont respectivement été enregistrés auprès de ladite institution A et de ladite institution B.

4. Procédé selon la revendication 1 ou 2, dans lequel ladite institution A enregistre également des informations contenant lesdites informations I_{B} dans lesdites informations reçues dudit utilisateur.

5. Procédé selon la revendication 1 ou 2, qui comprend en outre les étapes dans lesquelles :
ladite institution B :
(1) enregistre ladite clé de chiffrage commune déchiffrée K en association avec lesdites informations I_{B};
(2) génère une signature numérique SK_{B}(I_{B}) pour lesdites informations I_{B} par utilisation de ladite clé secrète SK_{B} ;
(3) chiffre ladite signature numérique SK_{B}(I_{B}) avec ladite clé de chiffrage commune K, en obtenant ainsi des informations K(SK_{B}(I_{B})) ; et
(4) envoie lesdites informations K(SK_{B}(I_{B})) à ladite institution A ;
ladite institution A :
(5) envoie lesdites informations K(SK_{B}(I_{B})) reçues de ladite institution B audit utilisateur ; et
ledit utilisateur :
(7) déchiffre lesdites informations K(SK_{B}(I_{B})) provenant de ladite institution A avec ladite clé de chiffrage commune K, en obtenant ainsi ladite signature numérique SK_{B}(I_{B}) de ladite institution B pour lesdites informations I_{B} ; et
(8) vérifie la validité de ladite signature numérique SK_{B}(I_{B}) avec ladite clé publique PK_{B} et, s'il est trouvé que ladite signature numérique SK_{B}(I_{B}) est valide, constate que lesdites informations I_{B} ont été enregistrées auprès de ladite institution B.

6. Appareil d'utilisateur dans un système de paiement électronique dans lequel un utilisateur enregistre différents éléments d'informations I_{A} et I_{B} auprès d'institutions A et B respectives, en utilisant le procédé selon la revendication 1, ledit appareil d'utilisateur comprenant :
une mémoire (310) pour stocker une clé publique PK_{B} de ladite institution B ;
un moyen générateur de clé commune (340) pour générer une clé de chiffrage commune K et pour la stocker dans ladite mémoire (310) ;
un moyen générateur d'informations (330) pour générer lesdites informations I_{A} destinées à être enregistrées auprès de ladite institution A et lesdites informations I_{B} destinées à être enregistrées auprès de ladite institution B et pour stocker lesdits éléments d'informations I_{A} et I_{B} dans ladite mémoire (310) ;
un premier moyen de chiffrage (322) pour chiffrer ladite clé de chiffrage commune K avec ladite clé publique PK_{B} pour générer des informations PK_{B}(K) ;
un second moyen de chiffrage (321) pour chiffrer lesdites informations I_{B} avec ladite clé de chiffrage commune K pour générer des informations K(I_{B}) ;
un moyen pour envoyer lesdits éléments d'informations PK_{B}(K), K(I_{B}) et I_{A} à ladite institution A ;
un moyen de déchiffrage (350) pour déchiffrer les informations K(SK_{B}(I_{B})) reçues de ladite institution A pour obtenir une signature SK_{B}(I_{B}) ; et
un moyen de vérification de signature (360) pour vérifier la validité de ladite signature SK_{B}(I_{B}) avec ladite clé publique PK_{B} et lesdites informations I_{B}.

7. Appareil selon la revendication 6, dans lequel ladite mémoire (310) contient une clé publique PK_{A} de ladite institution A et ledit moyen de vérification de signature (360) comporte un moyen pour vérifier la validité d'une signature SK_{A}(I_{A}) reçue de ladite institution A par utilisation de ladite clé publique PK_{A} et desdites informations I_{A}.

8. Système de paiement électronique comprenant :
un appareil d'utilisateur (300) comprenant un moyen pour mettre en oeuvre les étapes (a) et (b) du procédé selon la revendication 1,
un appareil d'institution A (100) comprenant un moyen pour mettre en oeuvre l'étape (c) du procédé selon la revendication 1, et
un appareil d'institution B (200) comprenant un moyen pour mettre en oeuvre l'étape (d) du procédé selon la revendication 1.

9. Système selon la revendication 8, dans lequel ledit appareil d'institution A comprend :
une mémoire (110) pour stocker une clé publique PK_{B} de ladite institution B ;
un moyen pour stocker dans ladite mémoire (110) lesdites informations I_{A} et les éléments d'informations K(I_{B}) et PK_{B}(K) reçus dudit utilisateur ;
un moyen pour envoyer lesdits éléments d'informations PK_{B}(K) et K(I_{B}) reçus dudit utilisateur à ladite institution B ; et
un moyen pour envoyer les informations K(SK_{B}(I_{B})) reçues de ladite institution B audit utilisateur.

10. Système selon la revendication 9, dans lequel ladite mémoire (110) dudit appareil d'institution A contient une clé secrète SK_{A} et une clé publique PK_{A} de ladite institution A, l'appareil d'institution A comprenant en outre un moyen de signature (130) pour signer lesdites informations K(I_{B}) reçues dudit utilisateur par utilisation de ladite clé secrète SK_{A} pour ainsi obtenir des informations de signature SK_{A}(K(I_{B})), dans lequel ledit moyen d'envoi est rendu apte à envoyer lesdites informations de signature SK_{A}(K(I_{B})) à ladite institution B en association avec lesdits éléments d'informations K(I_{B}) et PK_{B}(K).

11. Système selon la revendication 9 ou 10, dans lequel ledit appareil d'institution A comprend en outre un moyen de vérification de signature (140) pour vérifier, par utilisation de ladite clé publique PK_{B}, la validité de chacune desdites informations K(SK_{B}(I_{B})) et leur signature SK_{B}(K(SK_{B}(I_{B}))) reçues de ladite institution B.

12. Système selon la revendication 9 ou 10, dans lequel ledit appareil d'institution A comprend en outre un moyen de signature (150) pour signer lesdites informations I_{A} dans ladite mémoire (110) avec ladite clé secrète SK_{A} pour ainsi générer une signature SK_{A}(I_{A}), ladite signature SK_{A}(I_{A}) étant envoyée audit utilisateur en association avec lesdites informations K(SK_{B}(I_{B})) reçues de ladite institution B.

13. Système selon l'une quelconque des revendications 8 à 12, dans lequel ledit appareil d'institution B comprend :
une mémoire (210) pour stocker les clés secrète et publique SK_{B} ET PK_{B} de ladite institution B ;
un premier moyen de déchiffrage (231) pour déchiffrer des informations PK_{B}(K) provenant de ladite institution A avec ladite clé secrète SK_{B} pour obtenir une clé de chiffrage commune K ;
un second moyen de déchiffrage (232) pour déchiffrer des informations K(I_{B}) provenant de ladite institution A avec ladite clé de chiffrage commune K ;
un moyen pour stocker lesdites informations déchiffrées I_{B} et ladite clé de chiffrage commune K dans ladite mémoire (210) ;
un moyen de signature (250) pour signer lesdites informations I_{B} contenues dans ladite mémoire avec ladite clé secrète SK_{B} pour obtenir une signature SK_{B}(I_{B}) ;
un moyen de chiffrage (260) pour chiffrer ladite signature SK_{B}(I_{B}) avec ladite clé de chiffrage commune K pour générer des informations K(SK_{B}(I_{B})) ; et
un moyen pour envoyer lesdites informations K(SK_{B}(I_{B})) à ladite institution A.

14. Système selon la revendication 13, dans lequel ledit appareil d'institution B comprend en outre un moyen de signature (250) pour signer lesdites informations K(SK_{B}(I_{B})) avec ladite clé secrète SK_{B} pour générer des informations de signature SK_{B}(K(SK_{B}(I_{B}))), lesdites informations de signature SK_{B}(K(SK_{B}(I_{B}))) étant envoyées à ladite institution A en association avec lesdites informations K(SK_{B}(I_{B})).

15. Support d'enregistrement sur lequel est enregistré un programme destiné à être exécuté par un ordinateur de l'appareil d'utilisateur selon la revendication 6 dans le système de paiement électronique dans lequel un utilisateur enregistre différents éléments d'informations I_{A} et I_{B} auprès d'institutions A et B respectives, ledit programme comprenant les étapes qui consistent à :
générer une clé de chiffrage commune K ;
générer lesdites informations I_{A} devant être enregistrées auprès de ladite institution A et lesdites informations I_{B} destinées à être enregistrées auprès de ladite institution B ;
stocker ladite clé de chiffrage commune K et lesdits éléments d'informations I_{A} et I_{B} dans une mémoire ;
chiffrer ladite clé de chiffrage commune K avec une clé publique PK_{B} de ladite institution B pour générer des informations PK_{B(K)};
chiffrer lesdites informations I_{B} avec ladite clé de chiffrage commune K pour obtenir des informations K(I_{B}) ;
envoyer lesdits éléments d'informations I_{A}, PK_{B}(K) et K(I_{B}) à ladite institution A ;
déchiffrer des informations K(SK_{B}(I_{B})) provenant de ladite institution A avec ladite clé de chiffrage commune K pour obtenir une signature SK_{B}(I_{B}) ; et
vérifier la validité de ladite signature déchiffrée SK_{B}(I_{B}) avec ladite clé publique PK_{B} et lesdites informations I_{B}.

16. Support d'enregistrement selon la revendication 15, dans lequel ledit programme comprend en outre une étape consistant à vérifier la validité d'une signature SK_{A}(I_{A}) provenant de ladite institution A avec sa clé publique PK_{A} et lesdites informations I_{A}.
